# EUROPEAN PATENT SPECIFICATION

(11) **EP 2 632 208 B1**
(45) Date of publication and mention of the grant of the patent: **23.05.2018**
(21) Application number: 12156450.4
(22) Date of filing: 22.02.2012
(51) Int. Cl.: H04W 74/04, H04W 52/02, H04W 84/06

(54) **WIRELESS NETWORK FOR AIRCRAFT CABIN**
DRAHTLOSES NETZWERK FÜR FLUGZEUGKABINE
RÉSEAU SANS FIL POUR CABINE D'AÉRONEF

(43) Date of publication of application: 28.08.2013
(73) Proprietor: Zodiac Aerotechnics, 78370 Plaisir (FR)
(72) Inventor: Glösekötter, Peter, 48565 Steinfurt (DE); Meckes, Rüdiger, 23919 Berkenthin (DE); Rittner, Wolfgang, 23623 Ahrensbök (DE); Boomgarden, Günter, 23684 Scharbeutz (DE)
(74) Representative: Cabinet Plasseraud

(56) References cited:
- CONCEPCIÓN TORRES ET AL: "Reliable and energy optimized WSN design for a train application", JOURNAL OF SYSTEMS ARCHITECTURE, vol. 57, no. 10, 1 November 2011 (2011-11-01), pages 896-904, XP55035132, ISSN: 1383-7621, DOI: 10.1016/j.sysarc.2011.04.004
- TORRES C ET AL: "Reliable and Energy Optimized Routing Algorithm for WSN", , 15 June 2010 (2010-06-15), - 16 June 2010 (2010-06-16), pages 1-8, XP002681574, Berlin ISBN: 978-3-8007-3282-1 Retrieved from the Internet: URL:http://ieeexplore.ieee.org/stamp/stamp .jsp?tp=&arnumber=5759265> [retrieved on 2012-08-09]

## Description

The invention relates to a method for activating and maintaining a plurality of separate and distanced functional units in an aircraft cabin, in particular an aircraft. A separate and distanced functional unit may in particular be a remotely operable device used inside an aircraft cabin.

A further aspect of the invention is a cabin information system, in particular an emergency oxygen supply system for passenger of an aircraft.

Methods and systems for transmitting information within an aircraft are generally known in the prior art. It is an established technique in such systems to provide such information transmission via a plurality of signal lines connecting sender and receivers or - more generally - transmitter units adapted for sending an receiving data within said cabin. Whereas signal transmission via such signal lines is known to be safe and fast a general problem associated with such methods and systems is a significant effort for installing and maintaining such systems and a significant effort in case that such systems shall be extended to incorporate additional transmission units. Further, a general draw back of such systems is the weight associated with such signal lines which may represent a significant amount of the overall weight of the cabin information system as a whole in large civil aircraft.

In this description and the appending claims the term "functional unit" shall be understood generally as a device installed within an aircraft cabin or a cockpit of such aircraft which serves for operation of the aircraft in regular use or in an emergency situation. Such functional units may serve to provide information or entertainment to the passenger or may serve to supply oxygen to a passenger in an emergency situation and in these cases may be installed separately for one, two, three or more neighbored passengers typically. Moreover, such functional units maybe understood as general informational devices used by a crew member of such an aircraft or used to operate or control any independent devices like actuators within such aircraft.

In order to overcome at least some of the aforementioned drawbacks it has been proposed in EP 2168635A1 to replace at least partially the signal lines with a wireless transmission via a local area network within an aircraft cabin. Generally, such wireless transmission in a network has the potential to significantly reduce the weight of such information transmission system. However, significant problems occur in such systems and have resulted in manufacturers of aircraft to be reluctant in introducing such wireless systems. First, the installation of such a system may be time consuming in case that a large number of functional units must be connected to a transmission unit. Further, the transmission time via such wireless network may be significantly longer than via transmission by wire in conventional systems and thus may not fulfill the requirements of emergency systems in an aircraft. Finally, the energy consumption by such wireless transmission systems may be significantly higher than in transmission by wire and thus may reduce the economical efficiency of these systems and in particular may not fulfill the requirements to be fulfilled in emergency situation wherein the energy supply of the aircraft is not working.

In Torres et al.: "Reliable and energy optimized WSN design for a train application", Journal of systems architecture, vol. 57, no. 10, 1 November 2011, XP55035132, a simulator for network initialization of a wireless network is disclosed wherein parameters for simulating the network characteristics are the number of nodes per rows and per column and the distance between the rows and the columns, the position of the hub, the list of different numbers of time slots between two consecutive hub transmissions, the length of the sleep period and number of slots between two consecutives sleep intervals, the radio and CPU electrical parameters like radio power. These parameters are explained to have influence on the energy consumption and the response time of the wireless network.

It is an object of the invention to overcome these drawbacks in order to provide a method and a system for transmitting information within an aircraft which is well suited for quick and economic information transmission and fulfills the requirements of modern aircraft.

Said document XP55035132 has proposed to find by simulation one best compromise in terms of response time and low energy.

According to the invention, these problems are overcome by providing a method for activating and maintaining a plurality of separate and distanced functional units in an aircraft cabin, in particular an emergency oxygen supply system for passenger of an aircraft, comprising the steps of initializing a wireless network comprising a plurality of nodes, wherein each node is associated with a device, in particular a remotely operable device, wherein said initializing comprises associating each node a sending time slot within a time frame using a TDMA synchronization scheme, wherein each node is active to send signals during its sending time slot and is active to receive signals during a first set of time slots comprising a number of time slots of said frame, wherein the sending time slot of a node is different from the sending time slots of at least a plurality of its neighbored nodes, preferably all neighbored nodes, wherein a neighbored node of a node is defined to be within a predetermined distance to said node, sending an activation signal from one of the nodes to at least the plurality of nodes in a predetermined neighborhood distance to said node, wherein each node after having received said activation signal transmits said activation signal during the sending time slot associated to said node to at least one neighbored node, wherein the network is configured to switch from a first network configuration to a second network configuration for adapting to two or more different operating conditions, wherein the first and second network configurations are different in the trade off of response time versus energy consumption in that
- the first network configuration defines a different number of hub sending slots in every frame than the second network configuration,
- the first network configuration defines a different number of sleeping time slots for each node in every frame than the second network configuration,
- the first network configuration defines a different number of receiving time slots for each node in every frame than the second network configuration,
- the first network configuration defines a different range of neighborhood for each node than the second network configuration,
- the first network configuration defines a different number of sending time slots for each node in every frame than the second network configuration, and/or
- the first network configuration has a frame configuration wherein a first set of frames has a first time slot configuration and a second set of frames has a second time slot configuration different from the first time slot configuration and the second network configuration has a frame configuration different from the frame configuration of the the first network configuration, f
wherein the first network configuration is a low energy configuration having a first, long response time and the second network configuration is a fast transmission configuration having a second, shorter response time,
and wherein the first and second network configurations are preconfigured and stored in the network. According to this method a specific process of activating and maintaining a plurality of units in an aircraft is provided, wherein each unit is preferably associated to one node and said nodes are communicating with each other in a specific set-up. According to this set-up, the nodes need not to be active for communication all time, but instead the broadcasting time of the nodes are reduced to specific sending time slots and corresponding receiving time slots. By this, the energy consumption within the network can be significantly reduced and in particular the energy consumption of each single node can be significantly reduced. This allows the method to provide improved safety in case of failure of an energy supply unit within an aircraft and extends significantly the time period for which the method can be conducted using emergency energy supply systems of the aircraft. Furthermore, general efficiency of the aircraft is increased by this energy consumption reduction according to the method of the invention.

Still further, the method is characterized by a specific set-up of the communication between the nodes. This specific communication protocol is characterized by each node sending an activation signal to a plurality of nodes in a predetermined neighborhood distance to said node. By this, at first it is not required that each node is active to communicate with a centralized master node and thus the transmission power and the range of sending and receiving signals can be significantly reduced. Still further, by this specific communication protocol a certain spreading out and diversification of the activation signal is achieved resulting in an improved redundancy of the signal transmission. By this, the safety of the signal transmission is significantly improved by at the same time reduced energy consumption because it is neither required to provide more additional master nodes for the case of failure of a single master node responsible for sending out the activation signals to the other nodes. Furthermore, a plurality of signal paths is provided for signal transmission from one node to another node and failure of one single node will never result in an interruption of the signal transmission.

The method according to the invention is thus based on a specific type of flooding providing very high reliability and outstanding simplicity. No specific topology and maintenance is required since the method is based on a simple forwarding rule from one node to its neighbored nodes.

According to a first preferred embodiment the method comprises the steps of sequentially transmitting a synchronization packet by each node of the plurality of nodes during the number of s sending time slot(s) associated to the node, wherein the frame consists of m time slots and each node is active to listen during a multiple number of n receiving time slots of said frame to receive data, e.g. said synchronization packets, from the nodes in a predetermined neighborhood distance and is inactive during the remaining m-n-s number of sleeping time slots of said frame, wherein n<m, and wherein said n time slots preferably are different for at least two nodes, preferably for any two nodes of said plurality of nodes. According to this preferred embodiment the synchronization of the nodes is conducted in a very efficient way with regard to energy consumption and transfer speed. As a first measure, the nodes are not active to listen to the other nodes during all time slots within a frame but only during a selective number of time slots. Still further, the number of said selective time slots is adapted to the particular network configuration and/or the position of the node or other relevant parameters like the number of nodes in direct neighborhood to the particular node or the like. Generally, the number of active time slots must be selected to a higher value the more connectivity is provided for said particular node so that a receipt of a synchronization packet is possible on a plurality of transmission paths if said node has a high connectivity to a large number of other nodes. Vice versa, the energy consumption for receiving time slots can be reduced significantly if the connectivity is reduced. Generally, it is further to be understood that said particular embodiment is not only applicable to the transmission of a synchronization packet but also to other data to be transmitted via said network and thus the energy consumption of the network during regular operation is significantly reduced.

According to a further preferred embodiment the frame comprises m time slots and the method further comprises the step: Defining one of said m time slot within said frame to be a zero time slot, wherein in said zero time slot all nodes of the network are simultaneously active to listen to receive a signal signalizing the presence of an extension node connected to the network in the course of an extension. By this embodiment a common time slot is predetermined within said network and this significantly facilitates to extend the network in the course of installation or in course of maintenance or addition of further nodes to the network after installation. By this, in a network which already was installed to be ready for operation and is synchronized it is possible to easily install additional nodes (so-called "extension nodes") if the network is to be extended and to integrate these extension nodes to regular operation and synchronization of the network.

Still further, it is preferred to include the steps: Extending said network after initialization by connecting at least one extension node to said network, Sending a signal from each extension node during said zero time slot to at least one node in neighborhood of the extension node, wherein said signal signalizes the presence of the extension node and preferably data describing characteristics of said extension node, Wherein in case that a plurality of extension nodes are connected to said network the extension nodes are connected to the network one after the other. Using this particular method for extending the network it is avoided to connect the plurality of interconnected nodes, like e.g. an extension network, to the existing network in one single step since in such a case a conflict may arise in the course of initialization and synchronization of the extension nodes. To overcome this problem, the extension nodes are connected one after the other so that a single extension node is to be integrated and synchronized with the existing network at one time only.

According to a further preferred embodiment in said TDMA synchronization scheme the time slots are associated to the nodes such that each node is associated to at least one sending time slot for transmission of signals by said node into the network, each node is associated to a plurality of receiving time slots for listening to signals from the network, wherein in said plurality of receiving time slots of a node comprises, preferably consists of, the sending time slots of the nodes in a predetermined neighborhood distance of said node. According to this particular embodiment a type of deterministic distributed TDMA (ddTDMA) scheduling algorithm is used which is particularly adapted and configured for high signal speed and low energy consumption. To this regard the sending time slots of the nodes and the receiving time slots of the nodes are determined in such a way that the nodes need not to be active during the whole frame but may save energy in a sleeping mode in a plurality of time slots of a frame. Nevertheless, following the specific selection of receiving time slots of the nodes in neighborhood to the particular node, the signal speed is not adversely affected by this energy saving scheme and still further the safety of the signal transmission can be set to a sufficient level for life saving equipment in aircraft. To this extent, the neighborhood may be defined such that all those nodes which are in radio distance to a particular node are defined to be nodes in neighborhood of said particular node. However, the definition of neighborhood may be set to another value as well, e.g. to all nodes which are in a range of a fraction of said radio distance, e.g. 75, 50 or 25% of said radio distance. In particular, the network can be set up in such a way that the neighborhood of the nodes are defined similar for all nodes or in a specific setup, wherein a first group of nodes is associated with a neighborhood of nodes in a first range, e.g. the total radio distance of these nodes and a second group of nodes is associated with a second, different range, e.g. 50% of the radio distance of these nodes, wherein the total radio distance of all nodes may be identical. By this, a specific setup is provided wherein sufficient redundancy is provided for all nodes of the network by those nodes having a large neighborhood but at the same time significant energy is saved in that not all the nodes are driven with such a large neighborhood but instead only some selective nodes.

According to a further preferred embodiment the nodes are connected to each other to form a matrix network, wherein in said matrix network two nodes are connected to each other via a first direct path which is the connection between the two nodes including a minimum number of nodes and via at least one bypass path including not more than a predetermined number of additional nodes than the direct path, preferably not more than two additional nodes. In this particular set up a preferred trade-off between signal speed, redundancy and energy consumption is provided in that at least one bypass path is present for signal transmission between the nodes and this bypass path includes a number of nodes which is not higher than the nodes of the original paths plus a predetermined number of additional nodes. By this, the signal speed via the bypass path is maintained on a certain level which is acceptable for signal transmission in e.g. an emergency situation within an aircraft. The predetermined number of additional nodes may be set to 2, 3, 4, 5 or 6 nodes to ensure such sufficient signal transmission speed but in particular embodiments even higher number of additional nodes may be acceptable. Generally, it is to be noted that the smaller the number of additional nodes the higher the number of receiving slots of all nodes within one frame and thus the shorter the time for a broadcast transmission. Still further, the energy consumption may be higher in case of a higher number of receiving slots.

According to a further preferred embodiment at least two nodes are associated to one shared sending time slot for transmission of signal by said nodes into the network, and/or wherein at least two nodes are associated to one shared receiving time slots for listening to signals out of the network, wherein preferably said at least two nodes are arranged in the network in such a way that they are not neighbored nodes. According to this preferred embodiment two possible advantages are realized within the network. First, in case that the two nodes having the identical receiving slot both may be in distance to another slot of the network sending during said receiving slot so that a redundancy without any loss of transmission speed is provided within the network. Second, if the nodes are not in neighborhood to such a common node with a sending slot (i.e. the two nodes sharing the same receiving slot are in distance to each other corresponding to the double total radio distance of the nodes between these nodes) it is possible to use such receiving slot for different parts of the network without any conflict and thus the number of slots within one frame can be reduced.

According to a further preferred embodiment of the method the invention is further improved in that in a first step of the initialization process, each node determines a list of its neighbored nodes by determining the signal strength of a signal received from other nodes, wherein a node is added to said list of neighbored nodes if the signal strength of its signal is above a predetermined level and/or each node determines a list of its neighbored nodes by receiving their synchronization packets and each node registers the sending time slots of its neighbored nodes and determines a number of sleeping time slots wherein in a sleeping time slot the node neither is active to send a signal nor is active to receive signals, said number of sleeping time slots being selected under the time slots wherein none of the neighbored nodes has a sending time slot. With this preferred embodiment an optimization and a trade off between transmission speed, transmission safety and energy consumption is made during the initialization process in the network. Generally, it is desired to include as many sleeping time slots as possible under a predetermined limit of a minimum transmission speed within the network and a minimum redundancy factor. The transmission speed can be understood to include both a broadcast transmission, wherein one signal is to be transmitted to all nodes within the network and the characteristic minimum time is the time period during which all nodes have received the signal. Further, a point-to-point communication should be considered under the transmission speed and in such case the time required for transmission of a signal from one node to another node within the network shall be the basis for determining the transmission speed. The redundancy factor could be calculated as a specific stress test of the network wherein failure of any nodes within the network is assumed and then determined whether under such failure still a signal transmission to all nodes within the network is generally possible or is possible within a predetermined time limit. A redundancy factor could then be characterized as a number of any arbitrary node within the network which can fail without that such signal transmission is no longer possible.

Still further it is preferred that in a second step of the initialization process each node transmits a synchronization packet during its sending slot and each node is active during the sending slots of its neighbored nodes for receiving a synchronization packet, and each node is active during at least one dedicated slot of each or a predefined set of frames. This dedicated slot is further referred to as slot zero, each node is inactive during the remaining time slots of the frame, wherein based on the sending and the receipt of said synchronization packets the synchronization of the network is maintained and broken links between two nodes or broken nodes are detected by each node. According to this preferred embodiment the time slots of all frames or a set of frames is divided into one or more sending slots, one or more receiving slots and a common slot zero wherein during all these time slots the node is active and is inactive during the remaining time slots. By this, it is first ensured that each node is active to send signal to its neighbored nodes and to listen to signals from its neighbored nodes. Second, all nodes of the network are adapted to listen to a general information during a common time slot which is identical for all the nodes. This common time slot zero may be used for any data related to the topography of the network in the course of extension of the network or any other general function related to the topography or the communication within the network. To this extent, it is to be understood that the number of sending slots and the number of receiving slots may be different for each node within the network or may be different for a first set of nodes compared to a second set of nodes of the network. Still further, the number of sending time slots and receiving time slots may be identical for all frames but may be different for the frames as well, e.g. in that a frame of a first type is alternating with a frame of a second type having a different number of sending and/or receiving time slots than the first type of frame. Finally, the common time slot zero may be present in each frame or may be present in each second or each third frame only.

It is further preferred that each node is associated at least one sending time slot, at least one receiving time slot and a plurality of sleeping time slots and wherein after the initialization of the network the number of sleeping time slots is set to a calculated optimum number in an optimization process comprising the steps of:
a) Determining a first response time required for a broadcast transmission to forward a single data package by a node-to-node transmission from the hub node to all nodes within the network at a first number of sleeping time slots,
b) Comparing the first response time determined in step a) with a predetermined maximum response time and increasing the number of sleeping time slots if the first response time is below the predetermined maximum response time and/or reducing the number of sleeping time slots if the first response time is above the predetermined maximum response time;,
c) Repeating steps a) - b) with the increased number of sleeping time slots as first number of sleeping time slots until the total number of sleeping time slots cannot be further increased in step b).

According to this preferred embodiment an optimization process for determining an ideal trade off for a given network configuration is applied to the network during the initialization process. This optimization process determines a maximum number of sleeping time slots for all nodes which is acceptable without exceeding a predetermined time limit for a broadcast transmission within the network. It is to be understood that this optimization process may be applied to all nodes and thus result in a number of sleeping time slots which is similar for all nodes or my be applied to each single node or single set of nodes and thus result in an optimized number of sleeping time slots for each node or a set of nodes. Whereas in the former approach the initialization process may take a short time only and may be adapted to different network topographies in a quick and easy way the latter procedure will result in a detailed optimization of the sleeping time slots for each node within the network and thus produce a very efficient setup of the network at low energy consumption. Whereas it is described that the optimization uses a broadcast transmission from a hub node to all other nodes in the network it is to be understood that the optimization may in the same way be based on a point-to-point transmission from an arbitrary node in the network to another node in the network as well and may compare one single or a multiplicity of such point-to-point transmissions for the optimization process.

Still further, it is preferred that a hub node sends a data package during a number of hub sending time slots within a single frame, wherein in case of two hub sending time slots these being separated by at least one intermittent time slot, wherein a hub node is a dedicated node during which sending slots all nodes in the neighbourhood of the hub must be active to listen and wherein after the initialization of the network the number of hub sending time slots within said frame is set to a calculated optimum number in an optimization process comprising the steps of:
a) Determining a first response time required for a broadcast transmission to forward a single data package by a node-to-node transmission from the hub node to all nodes within the network at a first number of hub sending time slots,
b) Comparing the first response time determined in step a) with a predetermined maximum response time and reducing the number of hub sending time slots and/ or reducing the radio range by reducing transmitting power if the first response time is below the predetermined maximum response time and/or increasing the number of hub sending time slots and/ or increasing the radio range by increasing the transmission power if the first response time is above the predetermined maximum response time;
c) Repeating steps a) - b) with the selected lower number of hub sending time slots as first number of hub sending time slots until the number of hub sending slots cannot be further reduced in step b).

According to this preferred embodiment an optimization of the number of the hub sending time slots is conducted in order to meet a given response time for transmitting a data package within the network from a hub node to all other nodes in the network. It is to be understood that this optimization may be conducted alternatively or in addition to the optimization processes described beforehand. Thu, a further significant parameter affecting efficiency and energy consumption of the network is optimized in that the number or frequency of sending time slots of a single or a number of hub nodes within the network is determined. Generally, the higher the number of sending time slots (i.e. the smaller the number of intermittent time slots between two sending slots of a hub at a given total number of slots per frame) is selected the higher will be the transmission speed and the energy consumption of the network. Thus, when setting up the network for a given lower limit of transmission speed (corresponding to a given upper limit of response time) the optimization of the number of hub sending slots may significantly reduce the energy consumption. It is to be understood that this optimization process may be conducted independent from the optimization of the sleeping time slots of each node within the network.

The optimization process can be further improved in that in step a) an average response time is calculated as the first response time, the average response time being calculated as mean value based on a number of broadcast transmissions each initiated at random different starting times. According to this preferred embodiment a fast optimization is achieved in that the number of sleeping time slots or hub sending time slots, respectively, is changed depending on the average transmission speed within the network observed by at least two test-runs. In particular, this embodiment takes into account that a signal to be broadast into the network may be received by a hub node immediately before or after a hub sending slot and this significantly affects the transmission speed in the network depending on the frequency of hub sending slots.

According to a further preferred embodiment the method according to the invention is further improved in that the data is transmitted between the nodes using at least two different channels in the ISM band and the channels used by all nodes are changed on a predetermined frequent basis and/or two node automatically change to a different communication channel for their upcoming communication in case the communication of the two adjacent nodes gets distorted by e.g. interference. It is generally further preferred that each channel uses direct sequence spread spectrum to prevent narrowband interference. With this further characteristics, in terms of redundancy the invention takes advantage of frequency diversity against e.g. multi-path fading or interference, spatial diversity, (true mesh, multiple paths at each hop), and temporal diversity (secure link-layer ACK). This results in several advantages over single-channel protocols in terms of reliability, longer effective range and more available bandwidth. Further, according to the invention the communication may be encoded, so that it becomes feasible to monitor and protect the data against falsification.

Generally, it is to be understood that the method according to the invention provides the possibility to use different network configurations to trade response time versus energy consumption. Each network configuration defines the amount of hub sending slots in every frame. A hub sending slot is a dedicated slot during which all nodes in the neighborhood of the hub must be active to listen. By increasing the amount of hub sending slots, energy consumption increases and response time decreases, Further, the response time decreases and the energy consumption increases for higher transmission power. The transmission power may preferably adapted individually for each node and hub to meet predetermined criteria like minimum signal transmission time, maximum signal transmission time and/or maximum energy consumption. This will result in different transmission power settings for each node and hub within the network.

Another aspect of the invention is an emergency oxygen supply system for passenger of an aircraft, comprising
- a plurality of emergency oxygen devices,
- a wireless network comprising a plurality of nodes, wherein each node is associated with one of said emergency oxygen devices,
- each node comprising a controller with a memory device, said controller being adapted to store a time slot scheme within a time frame in said memory device,
- said network further comprising a main controller coupled to a hub node, wherein said main controller and the controller of the nodes are adapted to initialize said network using a TDMA synchronization scheme to associate sending and receiving time slots within a time frame to each node,
- wherein the controller of each node is adapted to be active to wireless receive signals during a first set of receiving time slots of said frame from the nodes to at least a plurality of nodes in a predetermined neighborhood distance to said node,
- wherein further upon receipt of a decompression signal the main controller is adapted for wireless sending an activation signal via said hub node to the other nodes,
- wherein the controller of at least a plurality of said nodes after having received said activation signal during a time slot is adapted to send said activation signal during a sending time slot associated to said node to the nodes in the predetermined neighborhood distance to said node,
wherein the network is configured to switch from a first network configuration to a second network configuration for adapting to two or more different operating conditions, wherein the first and second network configurations are different in the trade off of response time versus energy consumption in that
- the first network configuration defines a different number of hub sending slots in every frame than the second network configuration,
- the first network configuration defines a different number of sleeping time slots for each node in every frame than the second network configuration,
- the first network configuration defines a different number of receiving time slots for each node in every frame than the second network configuration,
- the first network configuration defines a different range of neighborhood for each node than the second network configuration,
- the first network configuration defines a different number of sending time slots for each node in every frame than the second network configuration, and/or
- the first network configuration has a frame configuration wherein a first set of frames has a first time slot configuration and a second set of frames has a second time slot configuration different from the first time slot configuration and the second network configuration has a frame configuration different from the frame configuration of the the first network configuration,
wherein the first network configuration is a low energy configuration having a first, long response time and the second network configuration is a fast transmission configuration having a second, shorter response time,
and wherein the first and second network configurations are preconfigured and stored in the network. This emergency oxygen supply system may be further improved according to claims 17-19. A preferred embodiment of the invention is described with reference to the enclosed Figures.
Figure 1 shows a network configuration of a preferred embodiment of the invention,
Figure 2 is a table wherein a frame within the network configuration of figure 1a is shown including the sending slots for each node,
Figure 3 is a diagram plotting the response time over the slots between two consecutive hub transmissions,
Fig. 4 is a first diagram of parameters of a broadcasting setup in a given network at a first broadcasting range,
Fig. 5 is a second diagram of parameters of a broadcasting setup in the network of Fig. 4 at a second, higher broadcasting range, and
Fig. 6 is a synchronizing scheme within a network for avoiding packet collision.

Generally, according to the invention a broadcasting method and a broadcasting system is provided applying a synchronized flooding as a routing algorithm. The time is divided in frames made up of slots, wherein every node of the network has preferably one sending slot to transmit within said frame and has receiving slots during the sending slots of its neighbor nodes. Only the hub nodes have more than one sending slot within said frame. During those slots, which are neither sending nor receiving slots, the nodes sleep and thus save energy. Further, preferably, a bind process slot is provided within a frame to allow integration of additional nodes into the network by initialization signal transmission within said bind process slot. In such a network, the energy consumption, in particular defined by the number of sending slots per node and the broadcasting power of each node, may be increased until a predetermined response time defined to be the maximum transmission time of a signal from the first transmission of a signal until receipt of this signal by all nodes within the network is met.

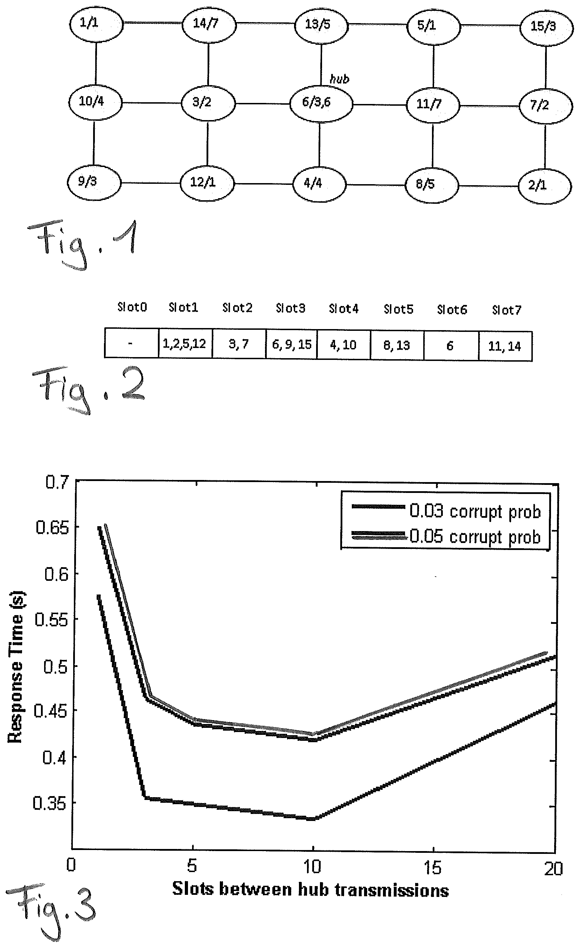

In Figure 1 a network comprising a total of 15 nodes 1-15 is shown. Each node is referenced by two numbers, wherein the first number is the identification code of the node and is unique for each node within the network and the second number is the sending slot of the node. The nodes are shown to be interconnected via lines but it is to be understood that the transmission between the nodes is conducted as a wireless transmission. The radio distance of each node may cover the nodes in direct adjacent a arrangement only or nodes in a greater distance of the node, i. e. behind the nodes in direct adjacent arrangement.

As can be seen from Figure 1, the node with the identification code 6 is configured to be a hub node and has two sending slots 3 and 6. In contrast to this, all other nodes 1-5, 7-15 are regular nodes having one single sending slot.

The transmission time within the network is divided into frames wherein one frame comprises a total of 8 slots 0-7 as can be seen in Figure 2. During slot 0 no node installed within the network is active for sending out signals but all nodes in the network are active to listen for receiving signals. This slot zero is used for integrating additional nodes into the network by way of receiving an initialization data of such a new node to be installed during slot 0.

The slots 1-7 are defined as sending slots for the nodes 1-15. As can be seen, the nodes share these slots in such a way that e. g. slot 1 is used as a sending slot for the nodes 1, 2, 5, 12 where as slot 6 is used as a sending time slot for node 6 only. Generally, the nodes of the network are shown to have different numbers of sending time slots and the time slots are shown to be shared by different numbers of nodes.

The network configuration represented in figure 1 shows a possible dd-TDMA-based slot assignment wherein the neighbor nodes are joined through a line and reliability is achieved through several redundant paths to each node. It is to be understood that the neighborhood of the nodes is defined to be the total radio range of each node, e. g. the neighborhood of a node consist of all those nodes which distance is less than or equal to the total radio range of the respective node. The radio power of the nodes maybe identical for all nodes or maybe different, in particular nodes with a high radio power can be installed in locations with a low node density defined as nodes per square meter whereas nodes having a lower radio power maybe installed in locations having a higher node density. The nodes in the network shown in Figure 1 are configured such that each node is active to listen during the sending time slots of its neighbored nodes and is inactive to safe energy during all other slots except for slot 0 and its own sending time slot. Thus, when assuming that the total radio range extends over the directly adjacent nodes only, node #11 will have the receiving time slots 1, 2, 3, 5 and 6 and will thus have a number of one sleeping time slot (slot 4) whereas node #11 will have the receiving time slots 4 and 7 and a number of four sleeping time slots (slots 2, 3, 5, 6). By this, a type of synchronized flooding using a Dd-TDMA-based scheduling algorithm is provided by the such configured network. The advantages of this synchronized flooding is a collision-free transmission, an increased number of paths to a node for enhanced reliability, an efficient use of bandwidth by using a shared slots. The network is scalable for different dimensions and extensions and allows simple implementation of additional nodes. Finally, no time or energy costs are required for routing maintenance within the network.

Using the such defined protocol, the response time and the energy consumption can be traded off in a very accurate and predictive manner for arbitrary network topologies, As a third parameter this trade-off may consider reliability of the network. This trade off will be made more clear by way of an example below. Response times can be predicted and tuned in a reliable fashion for a given application using the previously described protocol. Simulations also give an estimate of the system's energy consumption for a broadcast or point-to-point transmission, or even a determined period of time. Also, it is possible to measure the reliability of the network configuration based on the number of paths from a source to a destination node and the number of hops of every path. The sensor network can be arranged in a coordinate system; therefore, it is possible to have an estimate of the real distances between the individual nodes.

The number of time slots between the hub transmissions can be estimated by means of the new protocol. Thus, the maximum broadcast delay can be predicted and tuned to desired values. The protocol also takes into account a corrupt probability for each byte, representing distortions such as interference. Packet-lifetime is defined as the number of times that a packet can be forwarded from one node to another node in its neighborhood, thus preventing a packet being retransmitted forever. Lower lifetimes save energy, although this value must be high enough to ensure reliability. The user can also establish some periods of sleep for all the nodes in the network. The length of the period and the number of slots between two consecutive sleep periods and/or the transmission power are parameters. They are useful to save energy.

By means of a transmission simulation the protocol and/or the transmission power can be tuned to the individual application and works as follows:
Initially, the simulator builds the sensor network by setting each sensor node in the coordinate system.

Then, depending on the radio power, the simulator determines which nodes are direct neighbors. The neighborhood of a node consists of all the nodes whose distance to itself is less than or equal to the radio range.

Different network schemes are obtained by using a list of different numbers of time slots between two consecutive hub transmissions, which is configured by the user. For example, if one of the list values is 2 (two sensor node slots between two consecutive hub slots), all slots that are multiples of 3 will be assigned to the hub with the remainder being assigned to the other nodes by the dd-TDMA algorithm. A plot of the response time versus the slots between hum transmission is shown in Fig. 3, wherein two different corruption probabilities were examined in a simulation.

The dd-TDMA algorithm then runs to find the optimum TDMA assignment, Once this algorithm has finished, the frame can be adjusted to the minimum number of slots needed.

The main task of the simulator can now begin. Three situations can be simulated:
- Broadcast transmission: The hub must send a broadcast packet; therefore the program simulates all transmissions required until all the nodes in the network have received the packet.
- Point-to-point transmission: A node must send a packet to another node; therefore the program simulates all transmissions required until the packet arrives at the destination node.
- Network working over a pre-defined period of time: the simulator estimates the energy consumed by each node in the network during a period of time, where there is no packet transmission.

For the two first cases, the simulator computes the number of slots required to complete the packet transmission process, which is then used to calculate the response time. The simulator also estimates the energy consumption of the global system and then it produces its results in the form of several charts from which the most suitable frame scheme can be deduced. The number of slots between hub transmissions can be determined on the basis of these graphics to achieve acceptable time response and energy consumption.

The user can also try different combinations of sleep period length and number of slots between two consecutive sleep periods. The lowest energy consumption, that fulfils the established requirement of the response time, will be the best configuration.

In summary, the network parameters are then fitted by the simulator to build an optimum system in terms of speed, energy, and reliability.

In such network, the synchronized flooding algorithm may be conducted and devided up into generally two phases: In a first phase every node determines its slots according to the dd-TDMA-based algorithm and safes the transmission slots of its neighbors. In the course of this each node will determine the slots in which it can be inactive thus forming the bases for a sleep scheme to safe energy within the network. This first phase is called initialization.

In a second phase after the first phase each node transmits a synchronization packet during its sending slot to maintain node synchronization and detect broken links and/or nodes. Further, each node may transmit some information packet during this sending slot. A node may have one single sending slot or more sending slots. Usually, nodes having more than one sending slot are defined to be hub nodes within the network. Each node listens for packet's send by other nodes in its neighborhood during the receiving time slots determined in the first phase and additionally during the slot 0. This slot 0 is reserved to find new neighbors which are connected wirelessly to the network but not yet installed. No node is assigned a sending time slot in slot 0. During all other slots within the time frame the node sleeps and safes energy. Generally, it is to be understood that the such defined slot scheme may be applied to all frames but may alternatively be applied to only a subset of frames, e. g. such slot scheme of a node may be applied to every second or every third frame wherein the node is completely in active in the corresponding one ore two frames in between to further safe energy.

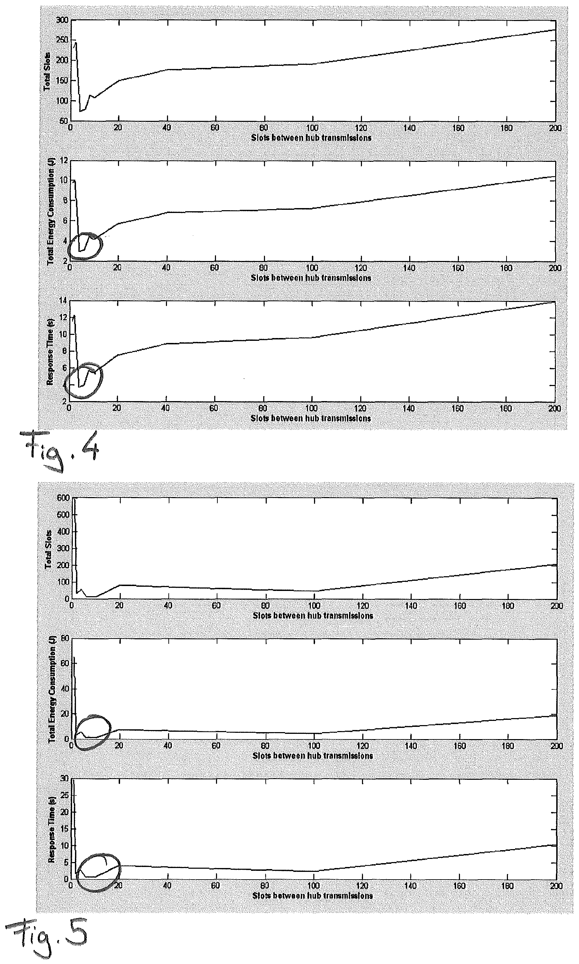

Fig. 4 shows a first set of diagrams representing transmission parameters under a first broadcasting range of each node. As can be seen, a rather low energy consumption (encircled) is achieved at the minimum response time (encircled) setting the number of slots between two consecutive hub transmissions to approximately 3-5 slots. However, the response time has an absolute value of approximately 4 seconds which is above the maximum response time.

Fig. 5 shows a second set of diagrams representing transmission parameters within the same network as that of Fig. 4 under a second broadcasting range of each node which is larger than the first broadcasting range. As can be seen, a somewhat higher energy consumption (encircled) is achieved at the minimum response time (encircled) setting the number of slots between two consecutive hub transmissions to approximately 5-10 slots. However, the response time has an absolute value of approximately 1 second which is below the maximum response time and thus acceptable.

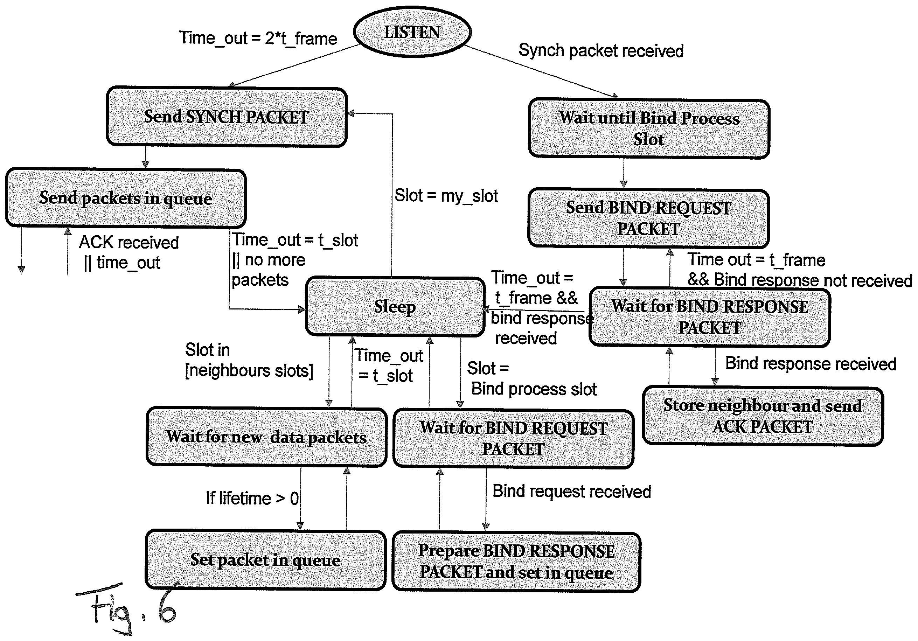

Fig. 6 shows a scheme of a synchronization scheme within a network according to the invention. As can be seen, packet collision is avoided by synchronization. Every node in the network sends a synchronization packet with its ID at the beginning of its transmission slot. This ID is also the number of its transmission slot. If a new node listen to this packet, it will know the slot at this moment.

## Claims

1. A method for activating and maintaining a plurality of separate and distanced functional units in an aircraft cabin, in particular an emergency oxygen supply system for passengers of an aircraft, comprising the steps of:
- initializing a wireless network comprising a plurality of nodes, wherein each node is associated with a device, in particular a remotely operable device wherein said initializing comprises associating each node a sending time slot within a time frame using a TDMA synchronization scheme,
- wherein each node is active to send signals during its sending time slot and is active to receive signals during a first set of time slots comprising a number of time slots of said frame,
- wherein the sending time slot of a node is different from the sending time slots of at least a plurality of its neighbored nodes, preferably all the neighbored nodes, wherein a neighbored node of a node is defined to be within a predetermined distance to said node,
- sending an activation signal from one of the nodes to at least the plurality of nodes in a predetermined neighborhood distance to said node,
- wherein each node after having received said activation signal transmits said activation signal during the sending time slot associated to said node to at least one neighbored node,
wherein the network is configured to switch from a first network configuration to a second network configuration for adapting to two or more different operating conditions,
wherein the first and second network configurations are different in the trade off of response time versus energy consumption in that
- the first network configuration defines a different number of hub sending slots in every frame than the second network configuration,
- the first network configuration defines a different number of sleeping time slots for each node in every frame than the second network configuration,
- the first network configuration defines a different number of receiving time slots for each node in every frame than the second network configuration,
- the first network configuration defines a different range of neighborhood for each node than the second network configuration,
- the first network configuration defines a different number of sending time slots for each node in every frame than the second network configuration, and/or
- the first network configuration has a frame configuration wherein a first set of frames has a first time slot configuration and a second set of frames has a second time slot configuration different from the first time slot configuration and the second network configuration has a second frame configuration different from the frame configuration of the first network configuration,
wherein the first network configuration is a low energy configuration having a first, long response time and the second network configuration is a fast transmission configuration having a second, shorter response time,
and wherein the first and second network configurations are preconfigured and stored in the network.

2. Method according to claim 1, further comprising the steps of:
- sequentially transmitting a synchronization packet by each node of the plurality of nodes during the number of s sending time slot(s) associated to the node,
- wherein the frames consist of m time slots and each node is active to listen during a multiple number of n receiving time slots of said frames to receive data from the nodes in a predetermined neighborhood distance and is inactive during the remaining m-n-s number of sleeping time slots of said frames,
- wherein n<m, and
- wherein said n time slots are different for at least two nodes of said plurality of nodes.

3. Method according to claim 1, wherein the frames comprises m time slots, further comprising the step of:
- defining one of said m time slots within said frame to be a zero time slot, wherein in said zero time slot all nodes of the network are simultaneously active to listen to receive a signal signalizing the presence of an extension node connected to the network in the course of an extension.

4. Method according to claim 3, further comprising the steps of:
- extending said network after initialization by connecting at least one extension node to said network,
- sending a signal from each extension node during said zero time slot to at least one node in neighborhood of the extension node, wherein said signal signalizes the presence of the extension node, and preferably data describing characteristics of said extension node,
- wherein in case that a plurality of extension nodes are connected to said network the extension nodes are connected to the network one after the other.

5. Method according to any of the preceding claims,
wherein in said TDMA synchronization scheme the time slots are associated to the nodes such that
- each node is associated to at least one sending time slot for transmission of signals by said node into the network,
- each node is associated to a plurality of receiving time slots for listening to signals from the network,
- wherein said plurality of receiving time slots of a node comprises, preferably consists of, the sending time slots of the nodes in a predetermined neighborhood distance of said node.

6. Method according to any of the preceding claims,
wherein the nodes are connected to each other to form a matrix network,
wherein in said matrix network two nodes are connected to each other
- via a first direct path which is the connection between the two nodes including a minimum number of nodes,
- via at least one bypass path including not more than a predetermined number of additional nodes than the direct path, preferably not more than two additional nodes.

7. Method according to any of the preceding claims,
wherein at least two nodes are associated to one shared sending time slot for transmission of signals by said nodes into the network, and/or
wherein at least two nodes are associated to one shared receiving time slot for listening to signals out of the network,
wherein said at least two nodes are arranged in the network in such a way that they are not neighbored nodes.

8. Method according to any of the preceding claims,
wherein in a first step of the initialization process
- each node determines a list of its neighbored nodes either by determining the signal strength of a signal received from other nodes, wherein a node is added to said list of neighbored nodes if the signal strength of its signal is above a predetermined level and/or
- each node determines a list of its neighbored nodes by receiving their synchronization packets,
- each node registers the sending time slots of its neighbored nodes and determines a number of sleeping time slots wherein in a sleeping time slot the node neither is active to send a signal nor is active to receive signals, said number of sleeping time slots being selected under the time slots wherein none of the neighbored nodes has a sending time slot.

9. Method according to claim 8,
wherein in a second step of the initialization process
- each node transmits a synchronization packet during its sending slot, and
- each node is active during the sending slots of its neighbored nodes for receiving a synchronization packet, and
- each node is active during at least one dedicated slot of at least of the predefined set of frames, the dedicated slot being referred to as slot zero.
- each node is inactive during the remaining time slots of the frame,
wherein based on the sending and the receipt of said synchronization packets the synchronization of the network is maintained and broken links between two nodes or broken nodes are detected by each node.

10. Method according to claim 1,
wherein each node is associated at least one sending time slot, at least one listening time slot and a plurality of sleeping time slots and wherein after the initialization of the network the number of sleeping time slots is set to a calculated optimum number in an optimization process comprising the steps of:
a) determining a first response time required for a broadcast transmission to forward a single data package by a node-to-node transmission from the hub node to all nodes within the network at a first number of sleeping time slots,
b) comparing the first response time determined in step a) with a predetermined maximum response time and increasing the number of sleeping time slots if the first response time is below the predetermined maximum response time or reducing the number of sleeping time slots if the first response time is above the predetermined maximum response time,
c) repeating steps a)-b) with the increased number of sleeping time slots as the first number of sleeping time slots until the total number of sleeping time slots cannot be further increased in step b).

11. Method according to claim 1,
wherein a hub node sends a data package during at least two hub sending time slots within a single frame, said two hub sending time slots being separated by at least one intermittent time slot, wherein a hub node is a dedicated node during which sending slots all nodes in the neighborhood of the hub must be active to listen and
wherein after the initialization of the network the number of hub sending time slots within said frame is set to a calculated optimum number in an optimization process comprising the steps of:
a) determining a first response time required for a broadcast transmission to forward a single data package by a node-to-node transmission from the hub node to all nodes within the network at a first number of hub sending time slots,
b) comparing the first response time determined in step a) with a predetermined maximum response time and reducing the number of hub sending time slots or reducing the radio range by reducing transmitting power if the first response time is below the predetermined maximum response time or increasing the number of hub sending time slots or increasing the radio range by increasing the transmission power if the first response time is above the predetermined maximum response time;
c) repeating steps a)-b) with the selected lower number of hub sending time slots as the first number of hub sending time slots until the number of hub sending slots cannot be further reduced in step b).

12. Method according to claim 10 or 11,
wherein in step a) an average response time is calculated as the first response time, the average response time being calculated as a mean value based on a number of broadcast transmissions each initiated at random different starting times.

13. Method according to any of the preceding claims,
wherein data is transmitted between the nodes using at least two different channels in the ISM band and the channels used by all nodes are changed on a predetermined basis.

14. Method according to any of the preceding claims,
wherein two nodes automatically change to a different communication channel for their upcoming communication in case the communication of the two adjacent nodes gets distorted by e.g. interference.

15. Method according to any of the preceding claims,
wherein a node of the network is associated
to a control unit of a portable breathing equipment device and said control unit is adapted to send data comprising information about the oxygen content of an oxygen source within said device or maintenance cycles of said device or the location of said device via said node,
to a control unit of a personal protective equipment device and said control unit is adapted to send data comprising information about the oxygen content of an oxygen source within said device or maintenance cycles of said device or the location of said device via said node, or
to a seat occupation control unit and said control unit is adapted to send data comprising information about occupation of a single or a plurality of passenger seats of the aircraft via said node.

16. An emergency oxygen supply system for passenger of an aircraft, comprising
- a plurality of emergency oxygen devices,
- a wireless network comprising a plurality of nodes, wherein each node is associated with one of said emergency oxygen devices,
- each node comprising a controller with a memory device, said controller being adapted to store a time slot scheme within a time frame in said memory device,
- said network further comprising a main controller coupled to a hub node,
wherein said main controller and the controller of the nodes are adapted to initialize said network using a TDMA synchronization scheme to associate sending and receiving time slots within a time frame to each node,
- wherein the controller of each node is adapted to be active to wireless receive signals during a first set of receiving time slots of said frame from the nodes to at least a plurality of nodes in a predetermined neighborhood distance to said node,
- wherein further upon receipt of a decompression signal the main controller is adapted for wireless sending an activation signal via said hub node to the other nodes,
- wherein the controller of at least a plurality of said nodes after having received said activation signal during a time slot is adapted to send said activation signal during a sending time slot associated to said node to the nodes in the predetermined neighborhood distance to said node.
wherein the network is configured to switch from a first network configuration to a second network configuration for adapting to two or more different operating conditions, wherein the first and second network configurations are different in the trade off of response time versus energy consumption in that
- the first network configuration defines a different number of hub sending slots in every frame than the second network configuration,
- the first network configuration defines a different number of sleeping time slots for each node in every frame than the second network configuration,
- the first network configuration defines a different number of receiving time slots for each node in every frame than the second network configuration,
- the first network configuration defines a different range of neighborhood for each node than the second network configuration,
- the first network configuration defines a different number of sending time slots for each node in every frame than the second network configuration, and/or
- the first network configuration has a frame configuration wherein a first set of frames has a first time slot configuration and a second set of frames has a second time slot configuration different from the first time slot configuration and the second network configuration has a second frame configuration different from the frame configuration of the first network configuration,
wherein the first network configuration is a low energy configuration having a first, long response time and the second network configuration is a fast transmission configuration having a second, shorter response time,
and wherein the first and second network configurations are preconfigured and stored in the network.

17. The system according to claim 16,
- wherein the controller of each node is adapted for transmitting a synchronization packet during the time slot associated to the node to at least the plurality of nodes in a predetermined neighborhood distance to said node,
- wherein a frame comprises m time slots and each node is adapted to listen during a multiple number of n receiving time slots of said frame to receive said synchronization packets from the nodes in a predetermined neighborhood distance and is inactive during a number of sleeping time slots of said frame and
- wherein the number n of said receiving time slots is different for at least two nodes of the wireless network, preferably for any two nodes of said plurality of nodes.

18. The system according to claim 16 or 17, wherein the controller of each node is adapted to control the nodes of the network to be simultaneously active to listen to receive a signal signalizing the presence of an extension node connected to the network in the course of an extension of the network during said m-1 time slot zero, and
wherein the controller of each node is preferably adapted for receiving a signal from each extension node during said m+1 time slot, wherein said signal signalizes the presence of the extension node and to store a receiving time slot corresponding to a sending time slot of said extension node if the extension node is in a predetermined neighborhood distance.

19. The system according to any of the claim 16 or 17, wherein said TDMA synchronization scheme is a ddTDMA synchronization scheme and wherein the controllers are adapted to associate the time slots are to the nodes such that
- each node is associated at least one sending time slot for transmission of signal by said node into the network,
- each node is associated a plurality of receiving time slots for listening to signal out of the network, wherein in said plurality of receiving time slots of a node comprises, preferably consists of, the sending time slots of the nodes in a predetermined neighborhood distance of said node.

## Patentansprüche

1. Verfahren zur Aktivierung und Wartung mehrerer getrennter und zueinander beabstandeter Funktionseinheiten in einer Flugzeugkabine, insbesondere eines Notsauerstoffversorgungssystems für Passagiere eines Flugzeugs, umfassend die Schritte:
- Initialisieren eines drahtlosen Netzwerks, das mehrere Knoten aufweist, wobei jeder Knoten einer Vorrichtung, insbesondere einer fernsteuerbaren Vorrichtung, zugeordnet ist, wobei das Initialisieren ein Zuordnen von jedem Knoten zu einem Sendezeitschlitz innerhalb eines Zeitrahmens unter Verwendung von einem TDMA-Synchronisationsschema umfasst,
- wobei jeder Knoten aktiv ist, um während seines Sendezeitschlitzes Signale zu senden, und aktiv ist, um während eines ersten Satzes von Zeitschlitzen, der eine Anzahl von Zeitschlitzen des Rahmens umfasst, Signale zu empfangen,
- wobei sich der Sendezeitschlitz eines Knotens von den Sendezeitschlitzen von mindestens mehrerer seiner benachbarten Knoten, vorzugsweise von allen benachbarten Knoten, unterscheidet, wobei ein benachbarter Knoten eines Knotens als innerhalb eines vorbestimmten Abstands zu dem Knoten befindlich definiert ist,
- Senden eines Aktivierungssignals von einem der Knoten mindestens an die mehreren Knoten in einem vorbestimmten Nachbarschaftsabstand zu dem Knoten,
- wobei jeder Knoten, nachdem er das Aktivierungssignal empfangen hat, das Aktivierungssignal während des Sendezeitschlitzes, der dem Knoten zugeordnet ist, an mindestens einen benachbarten Knoten sendet,
wobei das Netzwerk dafür ausgelegt ist, zur Anpassung an zwei oder mehr unterschiedliche Betriebszustände von einer ersten Netzwerkkonfiguration auf eine zweite Netzwerkkonfiguration umzuschalten,
wobei sich die erste und die zweite Netzwerkkonfiguration bezüglich des Kompromisses von Reaktionszeit gegenüber Energieverbrauch darin unterscheiden, dass
- die erste Netzwerkkonfiguration eine andere Anzahl von Hub-Sendeschlitzen in jedem Rahmen definiert als die zweite Netzwerkkonfiguration,
- die erste Netzwerkkonfiguration eine andere Anzahl von Ruhezeitschlitzen für jeden Knoten in jedem Rahmen definiert als die zweite Netzwerkkonfiguration,
- die erste Netzwerkkonfiguration eine andere Anzahl von Empfangszeitschlitzen für jeden Knoten in jedem Rahmen definiert als die zweite Netzwerkkonfiguration,
- die erste Netzwerkkonfiguration einen anderen Nachbarschaftsbereich für jeden Knoten definiert als die zweite Netzwerkkonfiguration,
- die erste Netzwerkkonfiguration eine andere Anzahl von Sendezeitschlitzen für jeden Knoten in jedem Rahmen definiert als die zweite Netzwerkkonfiguration, und/oder
- die erste Netzwerkkonfiguration eine Rahmenkonfiguration aufweist, bei der ein erster Rahmensatz eine erste Zeitschlitzkonfiguration aufweist und ein zweiter Rahmensatz eine zweite Zeitschlitzkonfiguration, die sich von der ersten Zeitschlitzkonfiguration unterscheidet, aufweist, und die zweite Netzwerkkonfiguration eine zweite Rahmenkonfiguration aufweist, die sich von der Rahmenkonfiguration der ersten Netzwerkkonfiguration unterscheidet,
wobei die erste Netzwerkkonfiguration eine Niedrigenergiekonfiguration ist, die eine erste, lange Reaktionszeit aufweist, und die zweite Netzwerkkonfiguration eine Schnellübertragungskonfiguration ist, die eine zweite, kürzere Reaktionszeit aufweist,
und wobei die erste und die zweite Netzwerkkonfiguration vorkonfiguriert und in dem Netzwerk gespeichert sind.

2. Verfahren nach Anspruch 1, ferner umfassend die Schritte:
- sequenzielles Übertragen eines Synchronisationspakets durch jeden Knoten der mehreren Knoten während der Anzahl von s Sendezeitschlitzen, die dem Knoten zugeordnet sind,
- wobei die Rahmen aus m Zeitschlitzen bestehen und jeder Knoten für eine Überwachung während einer vielfachen Anzahl von n Empfangszeitschlitzen der Rahmen aktiv ist, um Daten von den Knoten in einem vorbestimmten Nachbarschaftsabstand zu empfangen, und während der verbleibenden Anzahl von m - n - s Ruhezeitschlitzen der Rahmen inaktiv ist,
- wobei n < m, und
- wobei die n Zeitschlitze für mindestens zwei Knoten der mehreren Knoten unterschiedlich sind.

3. Verfahren nach Anspruch 1, wobei die Rahmen m Zeitschlitze aufweisen, wobei das Verfahren ferner den Schritt umfasst:
- Definieren von einem der m Zeitschlitze innerhalb des Rahmens als einen Nullzeitschlitz, wobei in dem Nullzeitschlitz alle Knoten des Netzwerks gleichzeitig für eine Überwachung aktiv sind, um ein Signal zu empfangen, das das Vorhandensein eines Erweiterungsknotens signalisiert, der mit dem Netzwerk im Zuge der Erweiterung verbunden wird.

4. Verfahren nach Anspruch 3, ferner umfassend die Schritte:
- Erweitern des Netzwerks nach Initialisierung durch Verbinden von mindestens einem Erweiterungsknoten mit dem Netzwerk,
- Senden von einem Signal von jedem Erweiterungsknoten während des Nullzeitschlitzes an mindestens einen Knoten in der Nachbarschaft des Erweiterungsknotens, wobei das Signal das Vorhandensein des Erweiterungsknotens signalisiert, und vorzugsweise von Daten, die Merkmale des Erweiterungsknotens beschreiben,
- wobei, im Fall, dass mehrere Erweiterungsknoten mit dem Netzwerk verbunden werden, die Erweiterungsknoten nacheinander mit dem Netzwerk verbunden werden.

5. Verfahren nach einem der vorstehenden Ansprüche,
wobei die Zeitschlitze bei dem TDMA-Synchronisationsschema den Knoten derart zugeordnet werden, dass
- jeder Knoten mindestens einem Sendezeitschlitz zur Übertragung von Signalen durch den Knoten in das Netzwerk zugeordnet wird,
- jeder Knoten mehreren Empfangszeitschlitzen zur Überwachung von Signalen von dem Netzwerk zugeordnet wird,
- wobei die mehreren Empfangszeitschlitze eines Knotens die Sendezeitschlitze der Knoten in einem vorbestimmten Nachbarschaftsabstand zu dem Knoten aufweisen, vorzugsweise daraus bestehen.

6. Verfahren nach einem der vorstehenden Ansprüche,
wobei die Knoten miteinander verbunden werden, um ein Matrixnetzwerk zu bilden,
wobei zwei Knoten in dem Matrixnetzwerk wie folgt miteinander verbunden sind
- über einen ersten direkten Weg, der die Verbindung zwischen den zwei Knoten ist, die eine Minimalanzahl von Knoten beinhaltet,
- über mindestens einen Umgehungsweg, der nicht mehr als eine vorbestimmte Anzahl zusätzlicher Knoten als der direkte Weg, vorzugsweise nicht mehr als zwei zusätzliche Knoten, beinhaltet.

7. Verfahren nach einem der vorstehenden Ansprüche,
wobei mindestens zwei Knoten einem geteilten Sendezeitschlitz zur Übertragung von Signalen durch die Knoten in das Netzwerk zugeordnet sind, und/oder
wobei mindestens zwei Knoten einem geteilten Empfangszeitschlitz zur Überwachung von Signalen aus dem Netzwerk zugeordnet sind,
wobei die mindestens zwei Knoten in einer derartigen Weise in dem Netzwerk angeordnet sind, dass sie keine benachbarten Knoten sind.

8. Verfahren nach einem der vorstehenden Ansprüche, wobei, in einem ersten Schritt des Initialisierungsprozesses,
- jeder Knoten eine Liste seiner benachbarten Knoten wahlweise durch Bestimmen der Signalstärke eines Signals, das von anderen Knoten aus empfangen wird, bestimmt, wobei ein Knoten der Liste von benachbarten Knoten hinzugefügt wird, wenn die Signalstärke seines Signals über einem vorbestimmten Pegel liegt, und/oder
- jeder Knoten eine Liste seiner benachbarten Knoten durch Empfangen ihrer Synchronisationspakete bestimmt,
- jeder Knoten die Sendezeitschlitze seiner benachbarten Knoten registriert und eine Anzahl von Ruhezeitschlitzen bestimmt, wobei der Knoten in einem Ruhezeitschlitz weder aktiv ist, um ein Signal zu senden, noch aktiv ist, um Signale zu empfangen, wobei die Anzahl von Ruhezeitschlitzen aus den Zeitschlitzen ausgewählt wird, wobei keiner der benachbarten Knoten einen Sendezeitschlitz aufweist.

9. Verfahren nach Anspruch 8,
wobei, in einem zweiten Schritt des Initialisierungsprozesses,
- jeder Knoten während seines Sendeschlitzes ein Synchronisationspaket überträgt, und
- jeder Knoten während der Sendeschlitze seiner benachbarten Knoten zum Empfangen eines Synchronisationspakets aktiv ist, und
- jeder Knoten während mindestens eines dedizierten Schlitzes von mindestens einem der vorbestimmten Rahmensätze aktiv ist, wobei der dedizierte Schlitz als Schlitz Null bezeichnet wird,
- jeder Knoten während der verbleibenden Zeitschlitze des Rahmens inaktiv ist,
wobei, basierend auf dem Senden und dem Empfang der Synchronisationspakete, die Synchronisation des Netzwerks aufrechterhalten wird und unterbrochene Verbindungen zwischen zwei Knoten oder defekte Knoten durch jeden Knoten erkannt werden.

10. Verfahren nach Anspruch 1,
wobei jeder Knoten mindestens einem Sendezeitschlitz, mindestens einem Überwachungszeitschlitz und mehreren Ruhezeitschlitzen zugeordnet ist, und wobei, nach der Initialisierung des Netzwerks, die Anzahl von Ruhezeitschlitzen auf eine berechnete optimale Anzahl in einem Optimierungsprozess eingestellt wird, der folgende Schritte umfasst:
a) Bestimmen einer ersten Reaktionszeit, die für eine Broadcast-Übertragung zur Weiterleitung eines einzelnen Datenpakets durch eine Knoten-zu-Knoten-Übertragung von dem Hub-Knoten zu allen Knoten innerhalb des Netzwerks bei einer ersten Anzahl von Ruhezeitschlitzen benötigt wird,
b) Vergleichen der ersten, in Schritt a) bestimmten Reaktionszeit mit einer vorbestimmten maximalen Reaktionszeit und Erhöhen der Anzahl von Ruhezeitschlitzen, wenn die erste Reaktionszeit unter der vorbestimmten maximalen Reaktionszeit liegt, oder Verringern der Anzahl von Ruhezeitschlitzen, wenn die erste Reaktionszeit über der vorbestimmten maximalen Reaktionszeit liegt,
c) Wiederholen der Schritte a)-b) mit der erhöhten Anzahl von Ruhezeitschlitzen als die erste Anzahl von Ruhezeitschlitzen solange, bis die Gesamtanzahl von Ruhezeitschlitzen in Schritt b) nicht weiter erhöht werden kann.

11. Verfahren nach Anspruch 1,
wobei ein Hub-Knoten ein Datenpaket während mindestens zwei Hub-Sendezeitschlitzen innerhalb eines einzelnen Rahmens sendet, wobei die zwei Hub-Sendezeitschlitze durch mindestens einen intermittierenden Zeitschlitz getrennt sind, wobei ein Hub-Knoten ein dedizierter Knoten ist, während dessen Sendeschlitzen alle Knoten in der Nachbarschaft des Hubs für eine Überwachung aktiv sein müssen, und
wobei, nach der Initialisierung des Netzwerks, die Anzahl von Hub-Sendezeitschlitzen innerhalb des Rahmens auf eine berechnete optimale Anzahl in einem Optimierungsprozess eingestellt wird, der folgende Schritte umfasst:
a) Bestimmen einer ersten Reaktionszeit, die für eine Broadcast-Übertragung zur Weiterleitung eines einzelnen Datenpakets durch eine Knoten-zu-Knoten-Übertragung von dem Hub-Knoten zu allen Knoten innerhalb des Netzwerks bei einer ersten Anzahl von Hub-Sendezeitschlitzen benötigt wird,
b) Vergleichen der ersten, in Schritt a) bestimmten Reaktionszeit mit einer vorbestimmten maximalen Reaktionszeit, und Verringern der Anzahl von Hub-Sendezeitschlitzen oder Verringern der Funkreichweite durch Verringern der Übertragungsleistung, wenn die erste Reaktionszeit unter der vorbestimmten maximalen Reaktionszeit liegt, oder Erhöhen der Anzahl von Hub-Sendezeitschlitzen oder Erhöhen der Funkreichweite durch Erhöhen der Übertragungsleistung, wenn die erste Reaktionszeit über der vorbestimmten maximalen Reaktionszeit liegt;
c) Wiederholen der Schritte a)-b) mit der ausgewählten geringeren Anzahl von Hub-Sendezeitschlitzen als die erste Anzahl von Hub-Sendezeitschlitzen solange, bis die Anzahl von Hub-Sendezeitschlitzen in Schritt b) nicht weiter verringert werden kann.

12. Verfahren nach Anspruch 10 oder 11,
wobei in Schritt a) eine durchschnittliche Reaktionszeit als die erste Reaktionszeit berechnet wird, wobei die durchschnittliche Reaktionszeit als ein Mittelwert basierend auf einer Anzahl von Broadcast-Übertragungen, die jeweils zu zufälligen unterschiedlichen Startzeitpunkten initiiert werden, berechnet wird.

13. Verfahren nach einem der vorstehenden Ansprüche,
wobei Daten zwischen den Knoten unter Verwendung von mindestens zwei unterschiedlichen Kanälen in dem ISM-Band übertragen werden und die Kanäle, die von allen Knoten verwendet werden, auf einer vorbestimmten Basis verändert werden.

14. Verfahren nach einem der vorstehenden Ansprüche, wobei zwei Knoten für ihre bevorstehende Kommunikation automatisch auf einen anderen Kommunikationskanal wechseln, falls die Kommunikation der zwei benachbarten Knoten z. B. durch Interferenz verzerrt wird.

15. Verfahren nach einem der vorstehenden Ansprüche,
wobei ein Knoten des Netzwerks zugeordnet ist
zu einer Steuereinheit einer tragbaren Atemgerätvorrichtung, und wobei die Steuereinheit dafür ausgelegt ist, Daten über den Knoten zu senden, die Informationen über den Sauerstoffgehalt einer Sauerstoffquelle in der Vorrichtung oder Wartungszyklen der Vorrichtung oder den Standort der Vorrichtung umfassen,
zu einer Steuereinheit einer persönlichen Schutzausrüstungsvorrichtung, und wobei die Steuereinheit dafür ausgelegt ist, Daten über den Knoten zu senden, die Informationen über den Sauerstoffgehalt einer Sauerstoffquelle in der Vorrichtung oder Wartungszyklen der Vorrichtung oder den Standort der Vorrichtung umfassen, oder
zu einer Sitzbelegungssteuereinheit, und wobei die Steuereinheit dafür ausgelegt ist, Daten über den Knoten zu senden, die Informationen über die Belegung eines einzelnen oder mehrerer Passagiersitze des Flugzeugs umfassen.

16. Notsauerstoffversorgungssystem für Passagiere eines Flugzeugs, aufweisend
- mehrere Notsauerstoffvorrichtungen,
- ein drahtloses Netzwerk, das mehrere Knoten aufweist, wobei jeder Knoten einer der Notsauerstoffvorrichtungen zugeordnet ist,
- wobei jeder Knoten eine Steuerung mit einer Speichervorrichtung aufweist, wobei die Steuerung dafür ausgelegt ist, ein Zeitschlitzschema innerhalb eines Zeitrahmens in der Speichervorrichtung zu speichern,
- wobei das Netzwerk ferner eine Hauptsteuerung aufweist, die mit einem Hub-Knoten verbunden ist, wobei die Hauptsteuerung und die Steuerung der Knoten dafür ausgelegt sind, das Netzwerk unter Verwendung von einem TDMA-Synchronisationsschema zur Zuordnung von Sende- und Empfangszeitschlitzen innerhalb eines Zeitrahmens zu jedem Knoten zu initialisieren,
- wobei die Steuerung von jedem Knoten dafür ausgelegt ist, für einen drahtlosen Empfang von Signalen von den Knoten an mindestens mehrere Knoten in einem vorbestimmten Nachbarschaftsabstand zu dem Knoten während eines ersten Satzes von Empfangszeitschlitzen des Rahmens aktiv zu sein,
- wobei die Hauptsteuerung ferner, bei Empfang eines Dekomprimierungssignals, für ein drahtloses Senden eines Aktivierungssignals über den Hub-Knoten an die anderen Knoten ausgelegt ist,
- wobei die Steuerung von mindestens mehreren der Knoten, nachdem sie das Aktivierungssignal während eines Zeitschlitzes empfangen hat, dafür ausgelegt ist, das Aktivierungssignal während eines Sendezeitschlitzes, der dem Knoten zugeordnet ist, an die Knoten in dem vorbestimmten Nachbarschaftsabstand zu dem Knoten zu senden,
wobei das Netzwerk dafür ausgelegt ist, zur Anpassung an zwei oder mehr unterschiedliche Betriebszustände von einer ersten Netzwerkkonfiguration auf eine zweite Netzwerkkonfiguration umzuschalten, wobei sich die erste und die zweite Netzwerkkonfiguration bezüglich des Kompromisses von Reaktionszeit gegenüber Energieverbrauch darin unterscheiden, dass
- die erste Netzwerkkonfiguration eine andere Anzahl von Hub-Sendeschlitzen in jedem Rahmen definiert als die zweite Netzwerkkonfiguration,
- die erste Netzwerkkonfiguration eine andere Anzahl von Ruhezeitschlitzen für jeden Knoten in jedem Rahmen definiert als die zweite Netzwerkkonfiguration,
- die erste Netzwerkkonfiguration eine andere Anzahl von Empfangszeitschlitzen für jeden Knoten in jedem Rahmen definiert als die zweite Netzwerkkonfiguration,
- die erste Netzwerkkonfiguration einen anderen Nachbarschaftsbereich für jeden Knoten definiert als die zweite Netzwerkkonfiguration,
- die erste Netzwerkkonfiguration eine andere Anzahl von Sendezeitschlitzen für jeden Knoten in jedem Rahmen definiert als die zweite Netzwerkkonfiguration, und/oder
- die erste Netzwerkkonfiguration eine Rahmenkonfiguration aufweist, bei der ein erster Rahmensatz eine erste Zeitschlitzkonfiguration aufweist und ein zweiter Rahmensatz eine zweite Zeitschlitzkonfiguration, die sich von der ersten Zeitschlitzkonfiguration unterscheidet, aufweist, und die zweite Netzwerkkonfiguration eine zweite Rahmenkonfiguration aufweist, die sich von der Rahmenkonfiguration der ersten Netzwerkkonfiguration unterscheidet,
wobei die erste Netzwerkkonfiguration eine Niedrigenergiekonfiguration ist, die eine erste, lange Reaktionszeit aufweist, und die zweite Netzwerkkonfiguration eine Schnellübertragungskonfiguration ist, die eine zweite, kürzere Reaktionszeit aufweist,
und wobei die erste und die zweite Netzwerkkonfiguration vorkonfiguriert und in dem Netzwerk gespeichert sind.

17. System nach Anspruch 16,
- wobei die Steuerung von jedem Knoten zum Übertragen eines Synchronisationspakets während des Zeitschlitzes, der dem Knoten zugeordnet ist, mindestens an die mehreren Knoten in einem vorbestimmten Nachbarschaftsabstand zu dem Knoten ausgelegt ist,
- wobei ein Rahmen m Zeitschlitze aufweist und jeder Knoten für eine Überwachung während einer vielfachen Anzahl von n Empfangszeitschlitzen des Rahmens, um die Synchronisationspakete von den Knoten in einem vorbestimmten Nachbarschaftsabstand zu empfangen, ausgelegt ist und während einer Anzahl von Ruhezeitschlitzen des Rahmens inaktiv ist, und
- wobei die Anzahl n der Empfangszeitschlitze für mindestens zwei Knoten des drahtlosen Netzwerks, vorzugsweise für beliebige zwei Knoten der mehreren Knoten, unterschiedlich ist.

18. System nach Anspruch 16 oder 17, wobei die Steuerung von jedem Knoten dafür ausgelegt ist, die Knoten des Netzwerks so zu steuern, dass sie gleichzeitig für eine Überwachung aktiv sind, um ein Signal zu empfangen, das das Vorhandensein eines Erweiterungsknotens signalisiert, der mit dem Netzwerk im Zuge einer Erweiterung des Netzwerks während des m - 1 Zeitschlitzes Null verbunden wird, und
wobei die Steuerung von jedem Knoten vorzugsweise zum Empfangen eines Signals von jedem Erweiterungsknoten während des m + 1 Zeitschlitzes, wobei das Signal das Vorhandensein des Erweiterungsknotens signalisiert, und zum Speichern eines Empfangszeitschlitzes, der einem Sendezeitschlitz des Erweiterungsknotens entspricht, ausgelegt ist, wenn sich der Erweiterungsknoten in einem vorbestimmten Nachbarschaftsabstand befindet.

19. System nach einem der Ansprüche 16 oder 17,
wobei das TDMA-Synchronisationsschema ein ddTDMA-Synchronisationsschema ist, und wobei die Steuerungen dafür ausgelegt sind, die Zeitschlitze den Knoten derart zuzuordnen, dass
- jeder Knoten mindestens einem Sendezeitschlitz zur Übertragung eines Signals durch den Knoten in das Netzwerk zugeordnet wird,
- jeder Knoten mehreren Empfangszeitschlitzen zur Überwachung von Signalen aus dem Netzwerk zugeordnet wird, wobei die mehreren Empfangszeitschlitze eines Knotens die Sendezeitschlitze der Knoten in einem vorbestimmten Nachbarschaftsabstand zu dem Knoten aufweisen, vorzugsweise daraus bestehen.

## Revendications

1. Procédé d'activation et de maintien d'une pluralité d'unités fonctionnelles séparées et distantes dans une cabine d'aéronef, en particulier un système d'alimentation en oxygène de secours pour les passagers d'un aéronef, comprenant les étapes suivantes :
- l'initialisation d'un réseau sans fil comprenant une pluralité de noeuds, dans lequel chaque noeud est associé à un dispositif, en particulier un dispositif actionnable à distance, dans lequel ladite initialisation comprend l'association de chaque noeud à un intervalle de temps de transmission dans une tranche de temps en utilisant un schéma de synchronisation TDMA,
- dans lequel chaque noeud est actif pour envoyer des signaux durant son intervalle de temps de transmission et est actif pour recevoir des signaux durant un premier ensemble d'intervalles de temps comprenant un nombre d'intervalles de temps de ladite tranche,
- dans lequel l'intervalle de temps de transmission d'un noeud est différent des intervalles de temps de transmission d'au moins une pluralité de ses noeuds voisins, de préférence tous les noeuds voisins, dans lequel un noeud voisin d'un noeud est défini comme étant dans une distance prédéterminée dudit noeud,
- l'envoi d'un signal d'activation d'un des noeuds à au moins la pluralité de noeuds dans une distance de voisinage prédéterminée audit noeud,
- dans lequel chaque noeud,après avoir reçu ledit signal d'activation, transmet ledit signal d'activation durant l'intervalle de temps de transmission associé audit noeud à au moins un noeud voisin,
dans lequel le réseau est configuré pour commuter d'une première configuration de réseau à une deuxième configuration de réseau pour s'adapter à deux conditions de fonctionnement différentes ou plus,
dans lequel les première et deuxième configurations de réseau sont différentes dans le compromis d'un temps de réponse en fonction d'une consommation d'énergie en ce que
- la première configuration de réseau définit un nombre différent d'intervalles de transmission d'un noeud central dans chaque tranche par rapport à la deuxième configuration de réseau,
- la première configuration de réseau définit un nombre différent d'intervalles de temps de veille pour chaque noeud dans chaque tranche par rapport à la deuxième configuration de réseau,
- la première configuration de réseau définit un nombre différent d'intervalles de temps de réception pour chaque noeud dans chaque tranche par rapport à la deuxième configuration de réseau,
- la première configuration de réseau définit une plage différente de voisinage pour chaque noeud par rapport à la deuxième configuration de réseau,
- la première configuration de réseau définit un nombre différent d'intervalles de temps de transmission pour chaque noeud dans chaque tranche par rapport à la deuxième configuration de réseau, et/ou
- la première configuration de réseau a une configuration de tranches de temps dans laquelle un premier ensemble de tranches a une première configuration d'intervalle de temps et un deuxième ensemble de tranches a une deuxième configuration d'intervalle de temps différente de la première configuration d'intervalles de temps et la deuxième configuration de réseau a une deuxième configuration de tranche différente de la configuration de tranche de la première configuration de réseau,
dans lequel la première configuration de réseau est une configuration de basse consommation d'énergie ayant un premier temps de réponse long et la deuxième configuration de réseau est une configuration de transmission rapide ayant un deuxième temps de réponse plus court,
et dans lequel les première et deuxième configurations de réseau sont préconfigurées et stockées dans le réseau.

2. Procédé selon la revendication 1, comprenant en outre les étapes suivantes :
- la transmission séquentielle d'un paquet de synchronisation par chaque noeud de la pluralité de noeuds durant le nombre de s intervalle(s) de temps de transmission associés au noeud,
- dans lequel les tranches comprennent m intervalles de temps et chaque noeud est actif pour écouter durant un nombre multiple de n intervalles de temps de réception desdites tranches pour recevoir des données à partir des noeuds dans une distance de voisinage prédéterminée et est inactif durant le nombre restant m - n - s d'intervalles de temps de veille desdites tranches,
- dans lequel n < m, et
- dans lequel lesdits n intervalles de temps sont différents pour au moins deux noeuds de ladite pluralité de noeuds.

3. Procédé selon la revendication 1, dans lequel les tranches comprennent m intervalles de temps, comprenant en outre l'étape suivante :
- la définition d'un desdits m intervalles de temps dans ladite tranche comme étant un intervalle de temps zéro,
dans lequel, dans ledit intervalle de temps zéro, tous les noeuds du réseau sont simultanément actifs pour écouter pour recevoir un signal signalant la présence d'un noeud d'extension connecté au réseau au cours d'une extension.

4. Procédé selon la revendication 3, comprenant en outre les étapes suivantes :
- l'extension dudit réseau après l'initialisation en connectant au moins un noeud d'extension audit réseau,
- l'envoi d'un signal à partir de chaque noeud d'extension durant ledit intervalle de temps zéro à au moins un noeud dans le voisinage du noeud d'extension, dans lequel ledit signal signale la présence du noeud d'extension, et de préférence des données décrivant des caractéristiques dudit noeud d'extension,
- dans lequel, dans le cas où une pluralité de noeuds d'extension est connectée audit réseau, les noeuds d'extension sont connectés au réseau l'un après l'autre.

5. Procédé selon l'une quelconque des revendications précédentes,
dans lequel, dans ledit schéma de synchronisation TDMA, les intervalles de temps sont associés aux noeuds de manière que
- chaque noeud soit associé à au moins un intervalle de temps de transmission pour la transmission de signaux par ledit noeud dans le réseau,
- chaque noeud soit associé à une pluralité d'intervalles de temps de réception pour l'écoute de signaux provenant du réseau,
- dans lequel ladite pluralité d'intervalles de temps de réception d'un noeud comprend, de préférence consiste en, les intervalles de temps de transmission des noeuds dans une distance de voisinage prédéterminée dudit noeud.

6. Procédé selon l'une quelconque des revendications précédentes,
dans lequel les noeuds sont connectés l'un à l'autre pour former un réseau matriciel, dans lequel, dans ledit réseau matriciel, deux noeuds sont connectés entre eux
- par le biais d'un premier chemin direct qui est la connexion entre les deux noeuds comprenant un nombre minimal de noeuds,
- par le biais d'au moins un chemin de dérivation ne comprenant par plus d'un nombre prédéterminé de noeuds additionnels par rapport au chemin direct, de préférence pas plus de deux noeuds additionnels.

7. Procédé selon l'une quelconque des revendications précédentes,
dans lequel au moins deux noeuds sont associés à un intervalle de temps de transmission partagé pour la transmission de signaux par lesdits noeuds dans le réseau, et/ou
dans lequel au moins deux noeuds sont associés à un intervalle de temps de réception partagé pour l'écoute de signaux hors du réseau,
dans lequel lesdits au moins deux noeuds sont agencés dans le réseau de manière qu'il n'y ait pas de noeuds voisins.

8. Procédé selon l'une quelconque des revendications précédentes,
dans lequel, dans une première étape du processus d'initialisation,
- chaque noeud détermine une liste de ses noeuds voisins soit en déterminant l'intensité de signal d'un signal reçu à partir d'autres noeuds, dans lequel un noeud est ajouté à ladite liste de noeuds voisins si l'intensité de signal de son signal est supérieure à un niveau prédéterminé et/ou
- chaque noeud détermine une liste de ses noeuds voisins en recevant leurs paquets de synchronisation,
- chaque noeud enregistre les intervalles de temps de transmission de ses noeuds voisins et détermine un nombre d'intervalles de temps de veille, dans lequel, dans un intervalle de temps de veille, le noeud n'est ni actif pour envoyer un signal ni actif pour recevoir des signaux, ledit nombre d'intervalles de temps de veille étant sélectionné dans les intervalles de temps dans lesquels aucun des noeuds voisins n'a un intervalle de temps de transmission.

9. Procédé selon la revendication 8,
dans lequel, dans une deuxième étape du processus d'initialisation,
- chaque noeud transmet un paquet de synchronisation durant son intervalle de transmission, et
- chaque noeud est actif durant les intervalles de transmission de ses noeuds voisins pour la réception d'un paquet de synchronisation, et
- chaque noeud est actif durant au moins un intervalle dédié d'au moins l'ensemble prédéfini de tranches, l'intervalle dédié étant indiqué comme intervalle zéro,
- chaque noeud est inactif durant les intervalles de temps restants de la tranche,
dans lequel, sur la base de la transmission et la réception desdits paquets de synchronisation, la synchronisation du réseau est maintenue et des liaisons interrompues entre deux noeuds ou des noeuds interrompus sont détectés par chaque noeud.

10. Procédé selon la revendication 1,
dans lequel chaque noeud est associé à au moins un intervalle de temps de transmission, au moins un intervalle de temps d'écoute et une pluralité d'intervalles de temps de veille et dans lequel, après l'initialisation du réseau, le nombre d'intervalles de temps de veille est fixé à un nombre optimal calculé dans un processus d'optimisation comprenant les étapes suivantes :
a) la détermination d'un premier temps de réponse nécessaire pour une transmission de diffusion pour transmettre un unique ensemble de données par une transmission de noeud à noeud du noeud central à tous les noeuds dans le réseau au niveau d'un premier nombre d'intervalles de temps de veille,
b) la comparaison du premier temps de réponse déterminé dans l'étape a) avec un temps de réponse maximal prédéterminé et l'augmentation du nombre d'intervalles de temps de veille si le premier temps de réponse est inférieur au temps de réponse maximal prédéterminé ou la réduction du nombre d'intervalles de temps de veille si le premier temps de réponse est supérieur au temps de réponse maximal prédéterminé,
c) la répétition des étapes a)-b) avec le nombre augmenté d'intervalles de temps de veille comme le premier nombre d'intervalles de temps de veille jusqu'à ce que le nombre total d'intervalles de temps de veille ne puisse plus être augmenté ultérieurement dans l'étape b).

11. Procédé selon la revendication 1,
dans lequel un noeud central envoie un ensemble de données durant au moins deux intervalles de temps de transmission du noeud central dans une unique tranche, lesdits deux intervalles de temps de transmission du noeud central étant séparés par au moins un intervalle de temps intermittent, dans lequel un noeud central est un noeud dédié durant lesquels intervalles de transmission, tous les noeuds dans le voisinage du noeud central doivent être actifs pour écouter et
dans lequel, après l'initialisation du réseau, le nombre d'intervalles de temps de transmission du noeud central dans ladite tranche est fixé à un nombre optimal calculé dans un processus d'optimisation comprenant les étapes suivantes :
a) la détermination d'un premier temps de réponse nécessaire pour une transmission de diffusion pour transmettre un unique ensemble de données par une transmission de noeud à noeud du noeud central à tous les noeuds dans le réseau au niveau d'un premier nombre d'intervalles de temps de transmission du noeud central,
b) la comparaison du premier temps de réponse déterminé dans l'étape a) avec un temps de réponse maximal prédéterminé et la réduction du nombre d'intervalles de temps de transmission du noeud central ou la réduction de la portée radio en réduisant une puissance de transmission si le premier temps de réponse est inférieur au temps de réponse maximal prédéterminé ou l'augmentation du nombre d'intervalles de temps de transmission du noeud central ou l'augmentation de la portée radio en augmentant la puissance de transmission si le premier temps de réponse est supérieur au temps de réponse maximal prédéterminé ;
c) la répétition des étapes a)-b) avec le nombre inférieur sélectionné d'intervalles de temps de transmission du noeud central comme le premier nombre d'intervalles de temps de transmission du noeud central jusqu'à ce que le nombre d'intervalles de temps de transmission du noeud central ne puisse plus être augmenté ultérieurement dans l'étape b).

12. Procédé selon la revendication 10 ou 11,
dans lequel, dans l'étape a), un temps de réponse moyen est calculé comme le premier temps de réponse, le temps de réponse moyen étant calculé comme une valeur moyenne sur la base d'un nombre de transmissions de diffusion lancées chacune à des temps de début différents aléatoires.

13. Procédé selon l'une quelconque des revendications précédentes,
dans lequel des données sont transmises entre les noeuds en utilisant au moins deux canaux différents dans la bande ISM et les canaux utilisés par tous les noeuds sont changés sur une base prédéterminée.

14. Procédé selon l'une quelconque des revendications précédentes,
dans lequel, deux noeuds changent automatiquement sur un canal de communication différent pour leur communication à venir dans le cas où la communication des deux noeuds adjacents est distordue par exemple par interférence.

15. Procédé selon l'une quelconque des revendications précédentes,
dans lequel un noeud du réseau est associé
à une unité de commande d'un dispositif d'équipement respiratoire portable et ladite unité de commande est adaptée pour transmettre des données comprenant des informations concernant la teneur en oxygène d'une source d'oxygène dans ledit dispositif ou des cycles d'entretien dudit dispositif ou de l'emplacement dudit dispositif par le biais dudit noeud,
à une unité de commande d'un dispositif d'équipement de protection individuelle et ladite unité de commande est adaptée pour transmettre des données comprenant des informations concernant la teneur en oxygène d'une source d'oxygène dans ledit dispositif ou des cycles d'entretien dudit dispositif ou de l'emplacement dudit dispositif par le biais dudit noeud, ou
à une unité de commande d'occupation de siège et ladite unité de commande est adaptée pour transmettre des données comprenant des informations concernant l'occupation d'un unique ou d'une pluralité de sièges de passager de l'aéronef par le biais dudit noeud.

16. Système d'alimentation en oxygène de secours pour les passagers d'un aéronef, comprenant
- une pluralité de dispositifs d'oxygène de secours,
- un réseau sans fil comprenant une pluralité de noeuds, dans lequel chaque noeud est associé à un desdits dispositifs d'oxygène de secours,
- chaque noeud comprenant un dispositif de commande avec un dispositif de mémoire, ledit dispositif de commande étant adapté pour stocker un schéma d'intervalle de temps dans une tranche de temps dans ledit dispositif de mémoire,
- ledit réseau comprenant en outre un dispositif de commande principal couplé à un noeud centrale, dans lequel ledit dispositif de commande principal et le dispositif de commande des noeuds sont adaptés pour initialiser ledit réseau en utilisant un schéma de synchronisation TDMA pour associer des intervalles de temps de transmission et de réception dans une tranche de temps à chaque noeud,
- dans lequel le dispositif de commande de chaque noeud est adapté pour être actif pour recevoir sans fil des signaux durant un premier ensemble d'intervalles de temps de réception de ladite tranche des noeuds à au moins une pluralité de noeuds dans une distance de voisinage prédéterminée dudit noeud,
- dans lequel en outre, à la réception d'un signal de décompression, le dispositif de commande principal est adapté pour transmettre sans fil un signal d'activation par le biais dudit noeud central aux autres noeuds,
- dans lequel le dispositif de commande d'au moins une pluralité desdits noeuds, après avoir reçu ledit signal d'activation durant un intervalle de temps, est adapté pour transmettre ledit signal d'activation durant un intervalle de temps de transmission associé audit noeud aux noeuds dans la distance de voisinage prédéterminée par rapport audit noeud,
dans lequel le réseau est configuré pour commuter d'une première configuration de réseau à une deuxième configuration de réseau pour s'adapter à deux conditions de fonctionnement différentes ou plus, dans lequel les première et deuxième configurations de réseau sont différentes dans le compromis d'un temps de réponse en fonction d'une consommation d'énergie en ce que
- la première configuration de réseau définit un nombre différent d'intervalles de transmission du noeud central dans chaque tranche par rapport à la deuxième configuration de réseau,
- la première configuration de réseau définit un nombre différent d'intervalles de temps de veille pour chaque noeud dans chaque tranche par rapport à la deuxième configuration de réseau,
- la première configuration de réseau définit un nombre différent d'intervalles de temps de réception pour chaque noeud dans chaque tranche par rapport à la deuxième configuration de réseau,
- la première configuration de réseau définit une plage différente de voisinage pour chaque noeud par rapport à la deuxième configuration de réseau,
- la première configuration de réseau définit un nombre différent d'intervalles de temps de transmission pour chaque noeud dans chaque tranche par rapport à la deuxième configuration de réseau, et/ou
- la première configuration de réseau a une configuration de tranche dans laquelle un premier ensemble de tranches a une première configuration d'intervalle de temps et un deuxième ensemble de tranches a une deuxième configuration d'intervalle de temps différente de la première configuration d'intervalles de temps et la deuxième configuration de réseau a une deuxième configuration de tranche différente de la configuration de tranche de la première configuration de réseau,
dans lequel la première configuration de réseau est une configuration de basse consommation d'énergie ayant un premier temps de réponse long et la deuxième configuration de réseau est une configuration de transmission rapide ayant un deuxième temps de réponse plus court,
et dans lequel les première et deuxième configurations de réseau sont préconfigurées et stockées dans le réseau.

17. Système selon la revendication 16,
- dans lequel le dispositif de commande de chaque noeud est adapté pour transmettre un paquet de synchronisation durant l'intervalle de temps associés au noeud à au moins la pluralité de noeuds dans une distance de voisinage prédéterminée par rapport audit noeud,
- dans lequel une tranche comprend m intervalles de temps et chaque noeud est adapté pour écouter durant un nombre multiple de n intervalles de temps de réception de ladite tranche pour recevoir lesdits paquets de synchronisation des noeuds dans une distance de voisinage prédéterminée et est inactif durant un nombre d'intervalles de temps de veille de ladite tranche et
- dans lequel le nombre n desdits intervalles de temps de réception est différent pour au moins deux noeuds du réseau sans fil, de préférence pour n'importe quels deux noeuds de ladite pluralité de noeuds.

18. Système selon la revendication 16 ou 17,
dans lequel le dispositif de commande de chaque noeud est adapté pour commander les noeuds du réseau pour être actifs simultanément pour écouter pour recevoir un signal signalant la présence d'un noeud d'extension connecté au réseau au cours d'une extension du réseau durant ledit intervalle de temps zéro m-1, et
dans lequel le dispositif de commande de chaque noeud est adapté de préférence pour recevoir un signal à partir de chaque noeud d'extension durant ledit intervalle de temps m+1, dans lequel ledit signal signale la présence du noeud d'extension et pour stocker un intervalle de temps de réception correspondant à un intervalle de temps de transmission dudit noeud d'extension si le noeud d'extension est dans une distance de voisinage prédéterminée.

19. Système selon l'une quelconque des revendications 16 ou 17,
dans lequel ledit schéma de synchronisation TDMA est un schéma de synchronisation ddTDMA et dans lequel les dispositifs de commande sont adaptés pour associer les intervalles de temps aux noeuds de manière que
- chaque noeud soit associé à au moins un intervalle de temps de transmission pour la transmission d'un signal par ledit noeud dans le réseau,
- chaque noeud soit associé à une pluralité d'intervalles de temps de réception pour l'écoute d'un signal hors du réseau, dans lequel ladite pluralité d'intervalles de temps de réception d'un noeud comprend, de préférence consiste en, les intervalles de temps de transmission des noeuds dans une distance de voisinage prédéterminée dudit noeud.
